# EUROPEAN PATENT APPLICATION

(11) **EP 1 772 839 A1**
(43) Date of publication of application: **11.04.2007**
(21) Application number: 04748148.6
(22) Date of filing: 26.07.2004
(51) Int. Cl.: G08G 1/16

(54) **DEVICE FOR DISPLAYING IMAGE OUTSIDE VEHICLE**

(71) Applicant: MATSUSHITA ELECTRIC INDUSTRIAL CO., LTD., Osaka 571-8501 (JP)
(72) Inventor: SHIBATA, Hiroyuki c/o Matsushita Elc. Ind. Co. Ltd, Chuo-ku Osaka-shi Osaka 540-6319 (JP)
(74) Representative: Schuster, Thomas
(86) International application number: PCT/JP2004/010989
(87) International publication number: WO 2006/011235

(57) **Abstract**

A problem to be solved by the invention is to provide a vehicle outside-image display apparatus that is capable of visualizing a visual field blocked by an obstacle. A vehicle outside-image display apparatus includes a vehicle outside-image capturing unit (114) adapted to capture an image outside the vehicle by a camera (111), an image receiving unit (116) adapted to receive vehicle outside-image information from outside, an image combining unit (118) adapted to combine the vehicle outside-image information received by the image receiving unit (116) with an image captured by the vehicle outside-image capturing unit (114), and an image display device (141) adapted to display renewed vehicle outside-image information produced by the image combining unit (118).

## Description

### TECHNICAL FIELD

The present invention relates to a vehicle outside-image display apparatus suitably used for a navigation system.

### BACKGROUND ART

Conventionally, navigation systems such as described in Patent literature 1 and Patent literature 2 have been known as examples of navigation systems.

The navigation system described in Patent literature 1 includes a camera that is installed to a vehicle and is configured to capture an image ahead in the vehicle's traveling direction, and an output device that outputs image information; the navigation system is configured so that, when outputting guide information according to the preset route, an image captured by the camera is combined with the guide information, such as an arrow indicating the traveling direction, and the combined image is output by the output device. The navigation system can display guide information in a form similar to the information obtained through the driver's field of view.

Further, the navigation system described in Patent literature 2 can select, as an output image, either a produced image generated from map data or an image ahead through a camera in the vehicle's traveling direction, and has a function to combine route information or guide information with either of the selected image. The navigation system can select either the produced image through map data or the actual image through the camera according to the clearness of the forward field of view.
(Patent literature 1) JP-A-9-304101.
(Patent literature 2) JP-A-11-108684.

Nevertheless, conventional navigation systems have not been satisfactory since there are obstacles to the visual field such as vehicles ahead and buildings, and in particular, the visual field is blocked by vehicles ahead in camera images that are captured the frontward view while in a traffic congestion.

The invention has been accomplished in view of such circumstances, and its object is to provide a vehicle outside-image display apparatus that can visualize the field of vision blocked by an obstacle.

### DISCLOSURE OF THE INVENTION

The invention provides, in accordance with a first aspect, a vehicle outside-image display apparatus comprising: a vehicle outside-image capturing unit adapted to capture a vehicle's outside image by a camera; an image receiving unit adapted to receive vehicle outside-image information from outside; an image combining unit adapted to combine the vehicle outside-image information received by the image receiving unit with the image captured by the vehicle outside-image capturing unit; and an image display device for displaying renewed vehicle outside-image information produced by the image combining unit.

With this configuration, the vehicle outside-image information received by the image receiving unit is combined and displayed with the image captured by the vehicle outside-image capturing unit to be combined. Therefore, it is possible to visualize the field of vision blocked by an obstacle.

In accordance with a second aspect, the invention provides a vehicle outside-image display apparatus as in the first aspect, wherein the image receiving unit may receive vehicle outside-image information from a vehicle ahead of a vehicle equipped with the vehicle outside-image display apparatus.

With this configuration, the vehicle outside-image information is received from the vehicle ahead of the vehicle equipped with the vehicle outside-image display apparatus. Therefore, it is possible to visualize the field of vision blocked by the vehicle ahead.

In accordance with a third aspect, the invention provides a vehicle outside-image display apparatus as in the first aspect, wherein the image combining unit combines a portion of the vehicle outside-image information received by the image receiving unit with the image captured by the vehicle outside-image capturing unit.

With this configuration, the vehicle outside-image information is received from the vehicle ahead of the vehicle equipped with the vehicle outside-image display apparatus. Therefore, it is possible to visualize the field of vision blocked by an obstacle appropriately.

In accordance with a fourth aspect, the invention provides a vehicle outside-image display apparatus as in the first aspect, further comprising an image transmitting unit adapted to transmit the renewed vehicle outside-image information produced by the image combining unit to outside.

With this configuration, the renewed vehicle outside-image information produced by the image combining unit is transmitted to outside. Therefore, it is possible to visualize the field of vision blocked by an obstacle in the outside.

In accordance with a fifth aspect, the invention provides a vehicle outside-image display apparatus as in the fourth aspect, wherein the image transmitting unit transmits the renewed vehicle outside-image information produced by the image combining unit to a rearward vehicle relative to a vehicle equipped with the vehicle outside-image display apparatus.

With this configuration, the renewed vehicle outside-image information produced by the image combining unit is transmitted to the rearward vehicle relative to the vehicle equipped with the vehicle outside-image display apparatus. Therefore, it is possible to visualize the field of vision blocked by an obstacle in the rearward vehicle.

In accordance with a sixth aspect, the invention provides a vehicle outside-image display apparatus as in the first aspect, further comprising a following distance measuring unit adapted to measure a following distance between a vehicle equipped with the vehicle outside-image display apparatus and a vehicle ahead thereof, and a field-of-vision condition determining unit adapted to determine, with the following distance measuring unit, whether or not a forward field of vision is blocked, wherein vehicle outside-image information is received from the image receiving unit if it is determined that the forward field of vision is blocked by the vehicle ahead.

With this configuration, it is determined whether or not a forward field of vision is blocked by measuring a following distance from a vehicle ahead of a vehicle equipped with the vehicle outside-image display apparatus. Therefore, the field-of-vision condition can be determined appropriately.

In accordance with a seventh aspect, the invention provides a vehicle outside-image display apparatus as in the first aspect, further comprising: a three-dimensional measuring unit adapted to perform, by a three-dimensional measuring instrument, a three-dimensional measurement for an environment in a picture range captured by the vehicle outside-image capturing unit; a measurement value receiving unit adapted to receive a three-dimensional measurement value from outside; and a viewpoint converting unit adapted to convert the vehicle outside-image information to have a viewpoint from the camera based on the three-dimensional measurement value received by the measurement value receiving unit and to supply the converted information to the image combining unit.

With this configuration, the vehicle outside-image information is converted to have a viewpoint from the camera based on the three-dimensional measurement value received by the measurement value receiving unit and the converted information is supplied to the image combining unit. Therefore, the field of vision blocked by an obstacle can be visualized in such a manner that it can be recognized more easily.

In accordance with an eighth aspect, the invention provides a vehicle outside-image display apparatus as in the seventh aspect, further comprising a measurement value combining unit adapted to combine the three-dimensional measurement value received by the measurement value receiving unit with the three-dimensional measurement value acquired by the three-dimensional measuring unit.

With this configuration, the three-dimensional measurement value received by the measurement value receiving unit is combined with the three-dimensional measurement value acquired by the three-dimensional measuring unit. Therefore, the field of vision outside that is blocked by an obstacle can be visualized in such a manner that it can be recognized more easily.

In accordance with a ninth aspect, the invention provides a vehicle outside-image display apparatus as in the eighth aspect, further comprising a measurement value transmitting unit adapted to transmit a renewed three-dimensional measurement value produced by the measurement value combining unit to outside.

With this configuration, the renewed three-dimensional measurement value produced by the measurement value combining unit is transmitted to outside. Therefore, the field of vision outside that is blocked by an obstacle can be visualized in such a manner that it can be recognized more easily.

In accordance with a tenth aspect, the invention provides a vehicle outside-image display apparatus as in the ninth aspect, wherein the measurement value transmitting unit transmits the renewed three-dimensional measurement value produced by the measurement value combining unit to a rearward vehicle relative to the vehicle equipped with the vehicle outside-image display apparatus.

With this configuration, the renewed three-dimensional measurement value produced by the measurement value combining unit is transmitted to a rearward vehicle relative to the vehicle equipped with the vehicle outside-image display apparatus. Therefore, the field of vision outside in the rearward vehicle that is blocked by an obstacle can be visualized in such a manner that it can be recognized more easily.

In accordance with an eleventh aspect, the invention provides a vehicle outside-image display apparatus as in the first aspect, wherein the image receiving unit receives vehicle outside-image information from an obstructive object that obstructs a field of view ahead of a vehicle equipped with the vehicle outside-image display apparatus.

With this configuration, vehicle outside-image information is received from an obstructive object that obstructs a field of view ahead of a vehicle equipped with the vehicle outside-image display apparatus. Therefore, it is possible to visualize the field of vision that is blocked by the obstructive object.

### BRIEF DESCRIPTION OF THE DRAWINGS

Fig. 1 is a block diagram illustrating the configuration of a vehicle outside-image display system according to a first embodiment of the invention.
Fig. 2 is a block diagram illustrating the configuration of a vehicle outside-image display apparatus provided for a second vehicle in the first embodiment of the invention.
Fig. 3 is a block diagram illustrating the configuration of a vehicle outside-image display apparatus provided for a first vehicle in the first embodiment of the invention.
Fig. 4 is a block diagram illustrating the configuration of a vehicle outside-image display apparatus provided for a third vehicle in the first embodiment of the invention.
Fig. 5 is a flow-chart for explaining an operation of the vehicle outside-image display system according to the first embodiment of the invention.
Fig. 6 is a view illustrating an example of an environment in the first embodiment of the invention.
Fig. 7 is a view illustrating a display example of a vehicle outside-image in the first embodiment of the invention.
Fig. 8 is a view illustrating one example of the case in which a blind spot exists in the first embodiment of the invention.
Fig. 9 is a block diagram illustrating the configuration of a vehicle outside-image display system according to a second embodiment of the invention.
Fig. 10 is a block diagram illustrating the configuration of a vehicle outside-image display apparatus provided for a second vehicle in the second embodiment of the invention.
Fig. 11 is a block diagram illustrating the configuration of a vehicle outside-image display apparatus provided for a first vehicle in the second embodiment of the invention.
Fig. 12 is a block diagram illustrating the configuration of a vehicle outside-image display apparatus provided for a third vehicle in the second embodiment of the invention.
Fig. 13 is a flow-chart for explaining an operation of the vehicle outside-image display system according to the second embodiment of the invention.
Fig. 14 is a block diagram illustrating the configuration of a vehicle outside-image display system according to a third embodiment of the invention.
Fig. 15 is a block diagram illustrating the configuration of a vehicle outside-image display apparatus provided for a vehicle in the third embodiment of the invention.
Fig. 16 is a block diagram illustrating the configuration of an image transmitting device provided for an obstructive object in the third embodiment of the invention.
Fig. 17 is a flow-chart for explaining an operation of the vehicle outside-image display system according to the third embodiment of the invention.

In the drawings, reference numerals are as follows: 100, 200, and 300 denote vehicle outside-image display systems; 101 to 103, 201 to 203, and 301 denote vehicle outside-image display apparatus; 104 denotes a traffic signal; 105 to 108 denote buildings; 111 to 113, 211 to 213, and 311 and 312 denote cameras; 114, 214, and 314 denote vehicle outside-image capturing units; 115, 215, and 315 denote image transmitting units; 116, 216, and 316 denote image receiving units; 118, 218, and 318 denote image synthesizing units; 121 to 123, 221 to 223, and 321 denote vehicle outside-image information; 141 to 143, 241 to 243, and 341 denote image display devices; 151 to 153, 251 to 253, and 351 and 352 denote wireless communication interfaces; 161 and 271 denote following distance measuring units; 162 and 272 denote field-of-vision condition determining units; 217 denotes a viewpoint converting unit; 231 and 232 denote three-dimensional measuring instruments; 234 denotes a three-dimensional measurement unit; 235 denotes a measurement value transmitting unit; 236 denotes a measurement value receiving unit; 237 denotes a measurement value synthesizing unit; 261 and 262 denote three-dimensional measurement values; 302 denotes an image transmitting device; 303 denotes an obstructive object sensing unit; and 322 denotes image information.

### BEST MODE FOR CARRYING OUT THE INVENTION

Hereinbelow, embodiments of the invention are explained in detail with reference to the drawings.

### FIRST EMBODIMENT

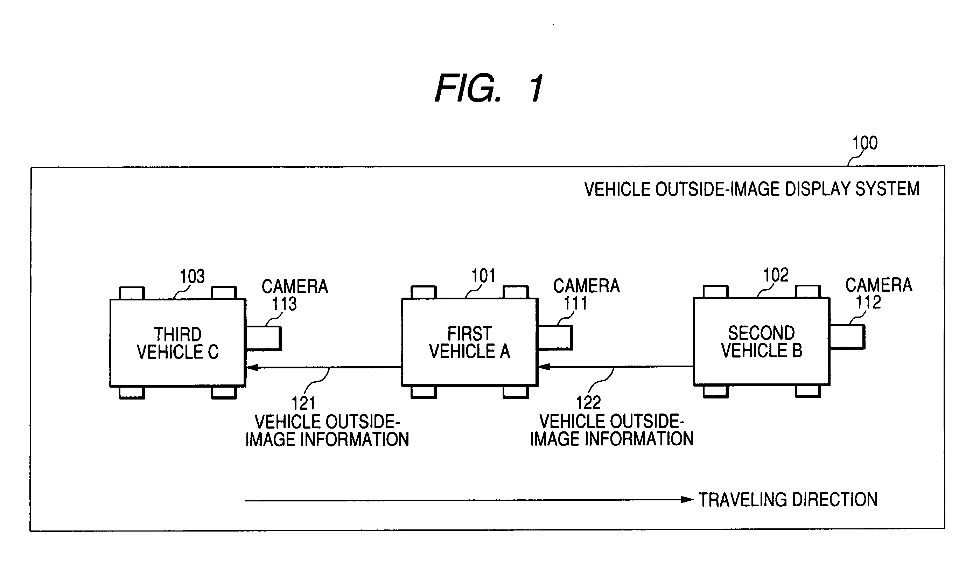

Fig. 1 is a block diagram illustrating the configuration of a vehicle outside-image display system 100 according to a first embodiment of the invention. Referring to Fig. 1, the vehicle outside-image display system 100 according to the present embodiment includes a vehicle outside-image display apparatus 102 provided for a second vehicle B, a vehicle outside-image display apparatus 101 provided for a first vehicle A, and a vehicle outside-image display apparatus 103 provided for a third vehicle C. The vehicle outside-image display apparatus 102 transmits, to a rearward vehicle, vehicle outside-image information 122 in which vehicle's outside conditions are visualized through a viewpoint of an installed camera 112. The vehicle outside-image display apparatus 101 receives the vehicle outside-image information 122 and transmits, to a further rearward vehicle, renewed vehicle outside-image information 121, wherein the received vehicle outside-image information 122 is combined with information in which vehicle's outside conditions are visualized through a viewpoint of an installed camera 111. The vehicle outside-image display apparatus 103 receives the vehicle outside-image information 121 and combines the received vehicle outside-image information 121 with information in which vehicle's outside conditions are visualized through a viewpoint of an installed camera 113.

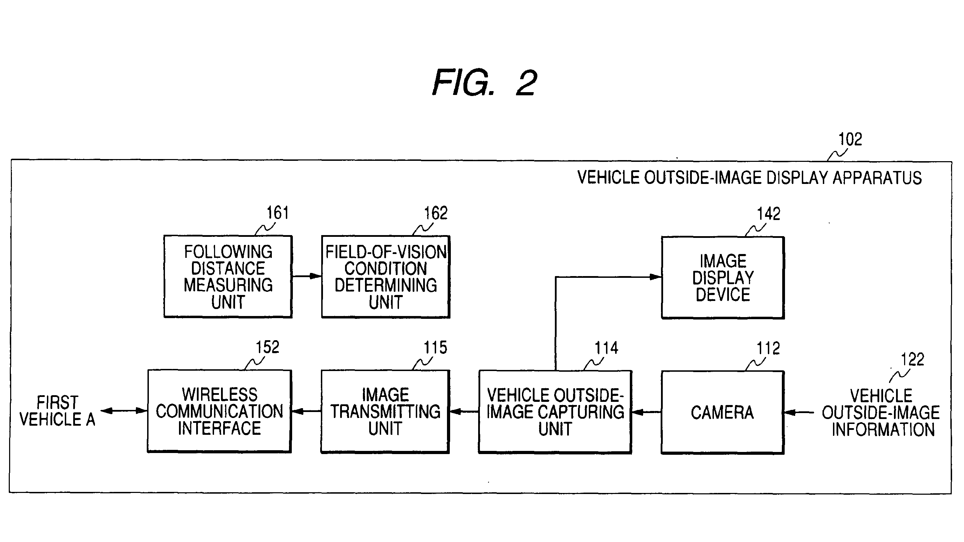

Fig. 2 is a block diagram illustrating the configuration of the vehicle outside-image display apparatus 102 provided for the second vehicle B. Referring to Fig. 2, the vehicle outside-image display apparatus 102 provided for the second vehicle B includes the camera 112, a vehicle outside-image capturing unit 114, an image display device 142, an image transmitting unit 115, and a wireless communication interface 152. The camera 112 captures an image of the view in front of the vehicle to acquire the vehicle outside-image information 122. The vehicle outside-image capturing unit 114 captures an image of the view in front of the vehicle (vehicle's outside) by the camera 112. The image display device 142 displays the image captured by the camera 112. The image transmitting unit 115 transmits the vehicle outside-image information 122. The wireless communication interface 152 performs data transmission/reception with the first vehicle A, which is a following vehicle.

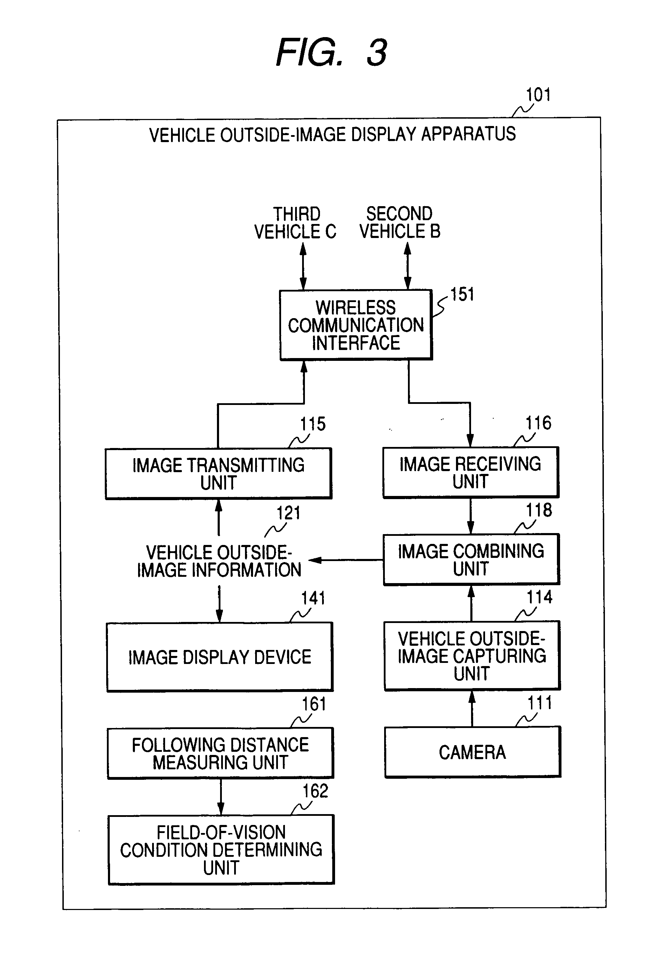

Fig. 3 is a block diagram illustrating the configuration of the vehicle outside-image display apparatus 101 provided for the first vehicle A. Referring to Fig. 3, the vehicle outside-image display apparatus 101 provided for the first vehicle A includes the camera 111, a vehicle outside-image capturing unit 114, a wireless communication interface 151, an image receiving unit 116, an image combining unit 118, an image display device 141, and an image transmitting unit 115. The camera 111 captures an image of the view in front of the vehicle. The vehicle outside-image capturing unit 114 captures an image of the view in front the vehicle (vehicle's outside) by the camera 111. The wireless communication interface 151 performs data transmission/reception with the second vehicle B, which is a forward vehicle, and with the third vehicle C, which is a following vehicle. The image receiving unit 116 receives the vehicle outside-image information 122 from the second vehicle B through the wireless communication interface 151. The image combining unit 118 combines the vehicle outside-image information 122 received by the image receiving unit 116 with the image captured by the vehicle outside-image capturing unit 114. The image display device 141 displays the renewed vehicle outside-image information 121 produced by the image combining unit 118. The image transmitting unit 115 transmits the renewed vehicle outside-image information 121 through the wireless communication interface 151 to the third vehicle C.

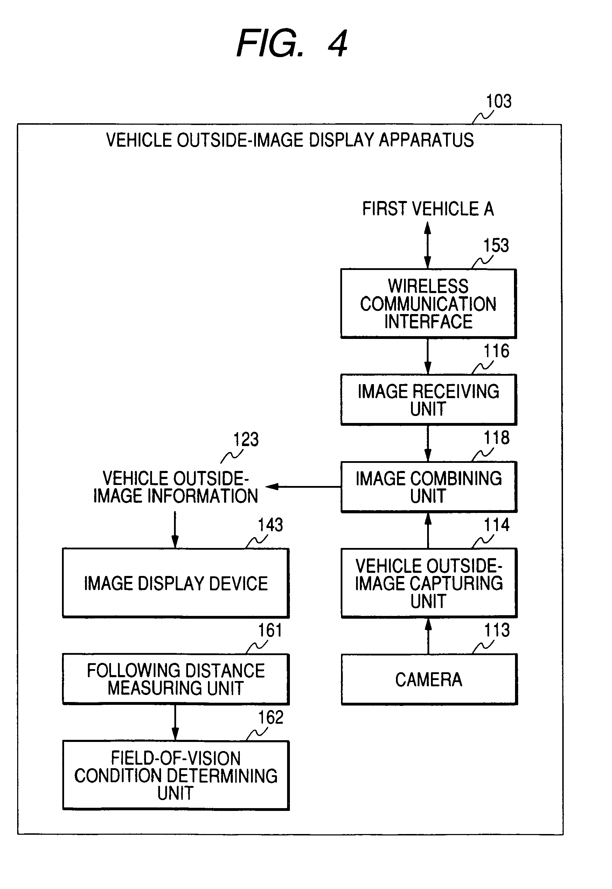

Fig. 4 is a block diagram illustrating the configuration of the vehicle outside-image display apparatus 103 provided for the third vehicle C. Referring to Fig. 4, the vehicle outside-image display apparatus 103 provided for the third vehicle C includes the camera 113, a vehicle outside-image capturing unit 114, a wireless communication interface 153, an image receiving unit 116, an image combining unit 118, and an image display device 143. The camera 113 captures an image of the view in front the vehicle. The vehicle outside-image capturing unit 114 captures an image of the view in front the vehicle (vehicle's outside) by the camera 113. The wireless communication interface 153 performs data transmission/reception with the first vehicle A, which is a forward vehicle. The image receiving unit 116 receives the vehicle outside-image information 121 from the first vehicle A through the wireless communication interface 153. The image combining unit 118 combines the vehicle outside-image information 121 received by the image receiving unit 116 with the image captured by the vehicle outside-image capturing unit 114. The image display device 143 displays renewed vehicle outside-image information 123 produced by the image combining unit 118.

When a certain vehicle performs data reception, the vehicle transmits data request information to a forward vehicle in advance, and the forward vehicle transmits data to the subject vehicle in response to the request information. For example, when the first vehicle A performs data reception, data request information is transmitted to the second vehicle B, which is the forward vehicle, in advance, and accordingly, the second vehicle B performs data transmission to the first vehicle A.

Each of the vehicle outside-image display apparatus 101 to 103 further includes a following distance measuring unit 161 that measures a following distance from the forward vehicle, and a field-of-vision condition determining unit 162 that determines, by the following distance measuring unit 161, whether or not the following distance from the forward vehicle is short and the forward field of vision is blocked. For example, if the field-of-vision condition determining unit 162 of one vehicle determines that the field of vision is good, the subject vehicle is recognized as being the second vehicle B. On the other hand, in the case where the field-of-vision condition determining unit 162 of one vehicle determines that the field of vision is not good because of the vehicle ahead, the subject vehicle is recognized as follows. If a request for vehicle outside-image information is being received from a following vehicle, the subject vehicle is recognized as the first vehicle A, because the subject vehicle needs to transmit the vehicle outside-image information to the following vehicle; on the other hand, if no request for vehicle outside-image information is being received from a following vehicle, the subject vehicle is recognized as the third vehicle C since the subject vehicle needs to transmit the vehicle outside-image information to the following vehicle.

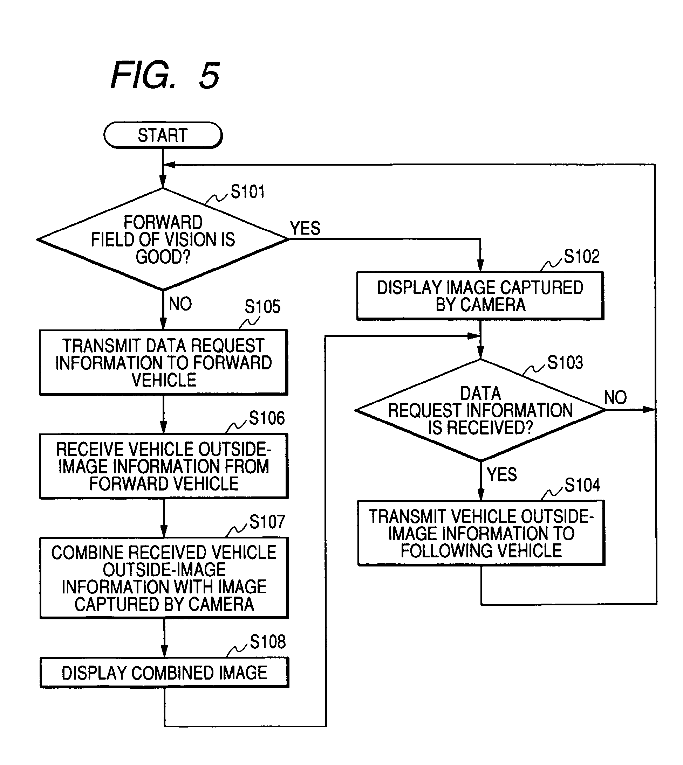

Next, the operation of the vehicle outside-image display system 100 of the present embodiment thus configured will be explained with reference to the flow-chart of Fig. 5.

First, in a certain vehicle, it is determined by the field-of-vision condition determining unit 162 whether the forward field of vision is good (step S101). If it is determined that the field of vision is good in step S101, it means that the vehicle is the second vehicle B, so the image by the installed camera 112 is displayed on the image display device 142 as it is (step S102). Next, it is determined whether or not data request information is being received from a following vehicle through the wireless communication interface 152 (step S103). If the data request information is received, an image captured by the camera 112 is transmitted as the vehicle outside-image information 122 by the image transmitting unit 115 through the wireless communication interface 152 to the first vehicle A, which is the following vehicle (step S104), and the process returns to step S101.

On the other hand, if it is determined in step S101 that the field of vision is not good, it means that the vehicle is either the first vehicle A or the third vehicle C, and accordingly, the vehicle transmits data request information through the wireless communication interface 151 or 153 to the forward vehicle (step S105). Next, the vehicle outside-image information 122 or 121 is received from the forward vehicle by the image receiving unit 116 through the wireless communication interface 151 or 153 (step S106). Subsequently, part of the image, captured by the installed camera 111 or 113, in which the field of vision is blocked by the forward vehicle is combined with a portion of the received vehicle outside-image information 122 or 121 to produce the renewed vehicle outside-image information 121 or 123 in which the field of vision is cleared (step S107). Next, the combined vehicle outside-image information 121 or 123 is displayed on the image display device 141 or 143 (step S108).

Next, it is determined whether or not data request information is being received from a following vehicle through the wireless communication interface 151 or 153 (step S103). If the data request information is being received, it means that the vehicle is the first vehicle A, so the vehicle outside-image information 121 is transmitted to the third vehicle C by the image transmitting unit 115 through the wireless communication interface 151 (step S104), and the process returns to step S101.

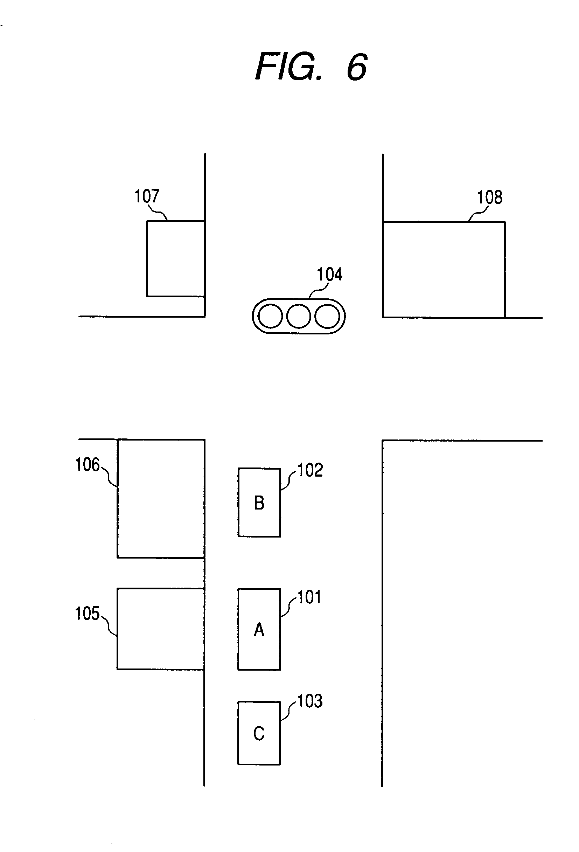

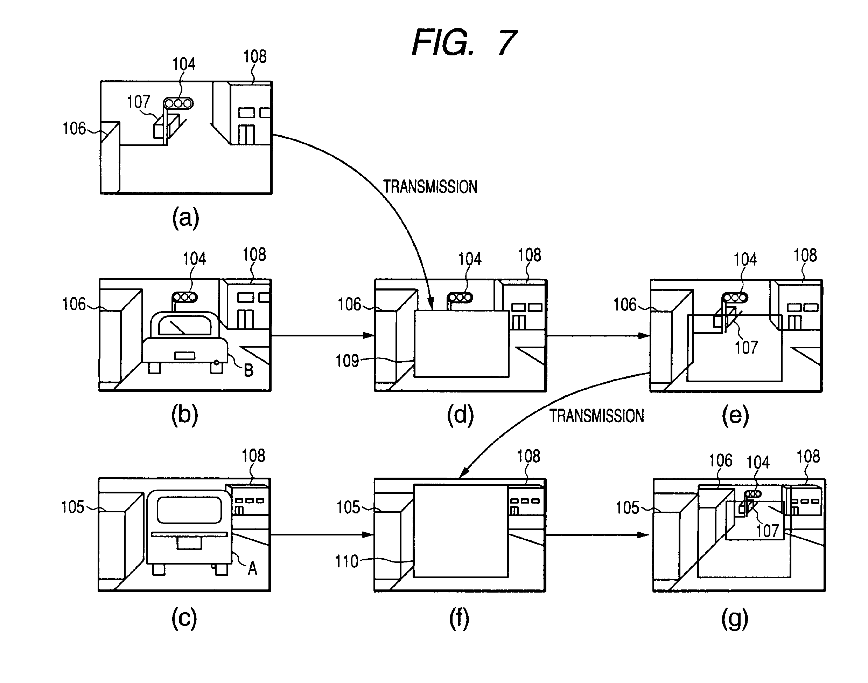

Here, specific contents of the processing are explained with reference to Fig. 6, which shows an example of an environment such as respective positions of the vehicles and buildings at the present situation. In the environment of Fig. 6, a traffic signal 104 is placed at an intersection, and buildings 105 to 108 are respectively arranged. In the image captured by the camera 112 installed in the second vehicle B, as illustrated in Fig. 7(a), the field of vision is good since there exists no vehicle ahead that causes obstruction.

On the other hand, in the image captured by the camera 111 installed in the first vehicle A, illustrated in Fig. 7(b), the field of vision is blocked because of the presence of the second vehicle B. Therefore, the first vehicle A receives the vehicle outside-image information 122, which is the image shown in Fig. 7(a), from the second vehicle B ahead, and detects the second vehicle B by such a method of determining the vehicle from the image among pre-registered vehicle image patterns, so as to determine a rectangular region 109, for example, that covers the second vehicle B, as illustrated in Fig. 7(d). Then, the received vehicle outside-image information 122 is reduced in size or cropped so that it fits into the rectangular region 109, and is combined therewith. For example, a partial image of the vehicle outside-image information 122 is captured out in such a manner that there will be no mismatch in images at the portion where the image outside the rectangular region 109 and the received vehicle outside-image information 122 are combined, and the partial image is embedded into the rectangular region 109. The vehicle outside-image information 121 thus produced is shown Fig. 7(e).

Furthermore, in the image captured by the camera 113 installed in the third vehicle C, shown in Fig. 7(c), the field of vision is blocked by the presence of the first vehicle A and the second vehicle B. Therefore, the third vehicle C receives the vehicle outside-image information 121, which is the image shown in Fig. 7(e), from the first vehicle A ahead, and determines a rectangular region 110, for example, that covers the first vehicle A and the second vehicle B, as shown in Fig. 7(f). Then, the received vehicle outside-image information 121 is reduced in size and cropped so that it fits into the rectangular region 110, and is combined therewith. The vehicle outside-image information 123 thus produced is shown in Fig. 7(g).

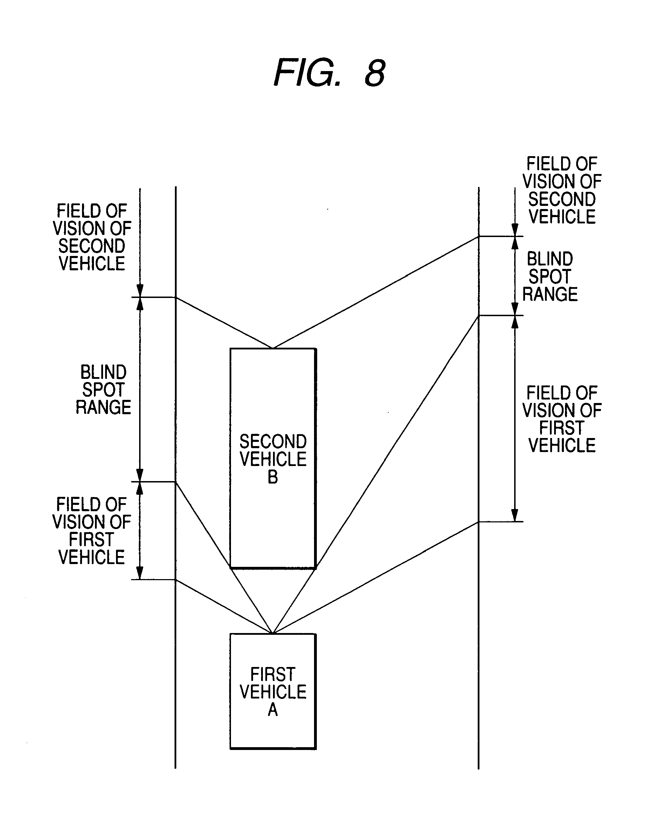

It should be noted that the cameras installed in vehicles in the vehicle outside-image display system 100, described in the present embodiment, are restricted to capture only images of the views in front. However, as shown in Fig. 8, if the second vehicle B ahead is a long vehicle, such as a truck, or if the following distance between the first vehicle A and the second vehicle B is too short, there appears a blind spot that cannot be viewed through both of the cameras of the first vehicle and the second vehicle. In view of this, it is possible to place cameras at every part of the vehicle so that images in all directions can be captured, whereby images can be combined with even the portions that become blind spots to visualize the portions.

Although the field of view in front is cleared in the present embodiment, it is also possible to clear the fields of view in all directions by installing cameras for all directions.

### SECOND EMBODIMENT

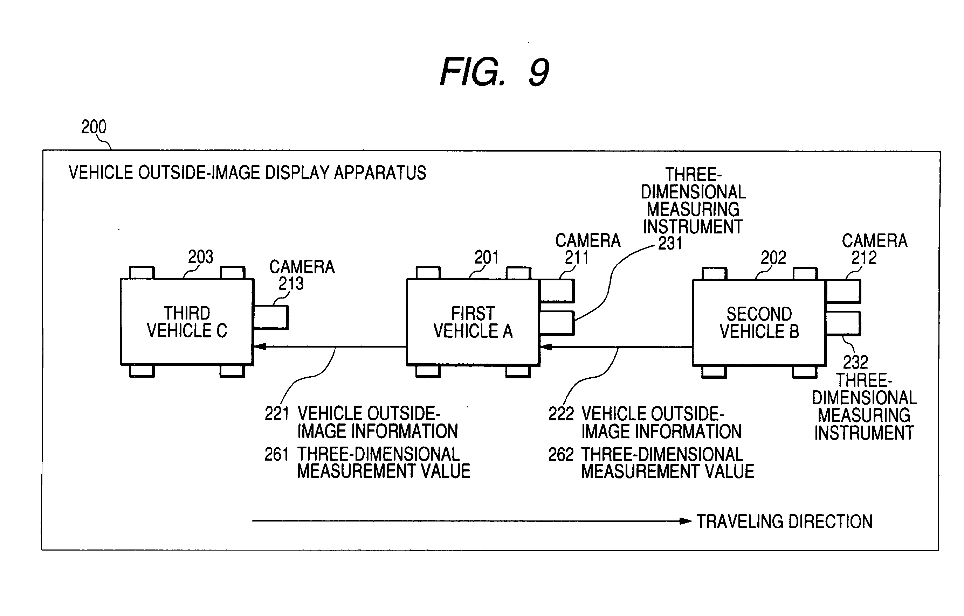

Fig. 9 is a block diagram illustrating the configuration of a vehicle outside-image display system 200 according to a second embodiment of the invention. The vehicle outside-image display system 200 according to the present embodiment differs from the vehicle outside-image display system 100 according to the first embodiment described above in that each of the first vehicle and the second vehicle further includes a three-dimensional measuring instrument that performs a three-dimensional measurement of the environment in a picture range of the camera, and that a three-dimensional measurement value measured by the three-dimensional measuring instrument is added to the data to be transmitted/received through the wireless communication interface.

Specifically, referring to Fig. 9, the vehicle outside-image display system 200 according to the present embodiment includes a vehicle outside-image display apparatus 202 provided for the second vehicle B, a vehicle outside-image display apparatus 201 provided for the first vehicle A, and a vehicle outside-image display apparatus 203 provided for the third vehicle C. The vehicle outside-image display apparatus 202 transmits, to a rearward vehicle, vehicle outside-image information 222 in which vehicle's outside conditions are visualized through a viewpoint of an installed camera 212, and a three-dimensional measurement value 262 obtained from a three-dimensional measuring instrument 232 that performs a three-dimensional measurement of an environment in a picture range of the camera 212.
The vehicle outside-image display apparatus 201 receives the vehicle outside-image information 222 and the three-dimensional measurement value 262, and transmits, to a further rearward vehicle, renewed vehicle outside-image information 221. The renewed vehicle outside-image information 221 is image information obtained by subjecting the received vehicle outside-image information 222 to viewpoint conversion based on the three-dimensional measurement value 262 and thereafter combining the received vehicle outside-image information 222 with information in which vehicle's outside conditions are visualized through the viewpoint of an installed camera 211. The vehicle outside-image display apparatus 201 also transmits, to the rearward vehicle, a renewed three-dimensional measurement value 261, which is a measurement value obtained by combining the received three-dimensional measurement value 262 with a three-dimensional measurement value obtained by the three-dimensional measuring instrument 231 that performs a three-dimensional measurement for an environment in a picture range of the camera 211. The vehicle outside-image display apparatus 203 receives the vehicle outside-image information 221 and the three-dimensional measurement value 261, and combines the received vehicle outside-image information 221 with information in which vehicle's outside conditions are visualized through the viewpoint of an installed camera 213 after the received vehicle outside-image information 221 has been subjected to viewpoint conversion based on the three-dimensional measurement value 261.

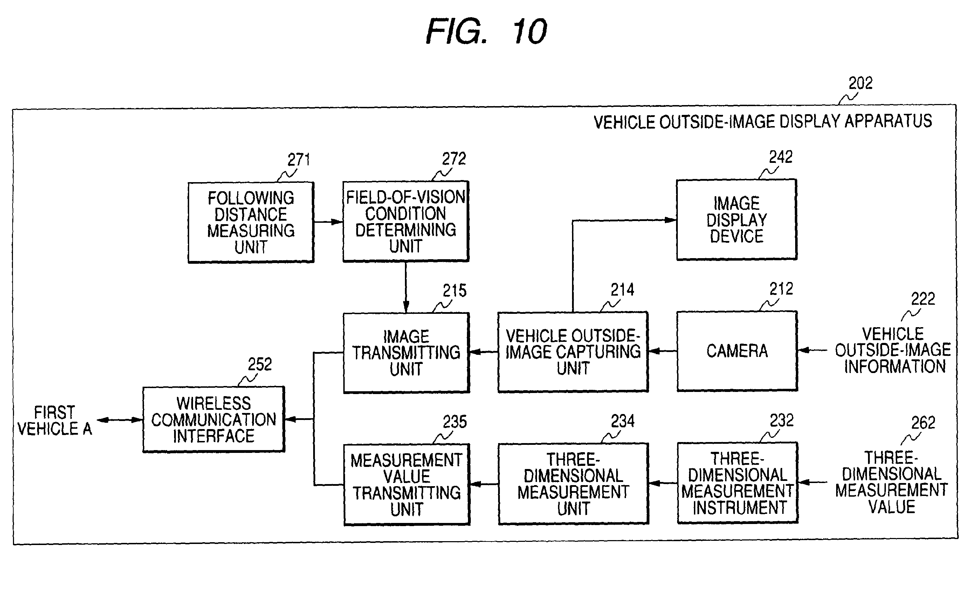

Fig. 10 is a block diagram illustrating the configuration of the vehicle outside-image display apparatus 202 provided for the second vehicle B. Referring to Fig. 10, the vehicle outside-image display apparatus 202 provided for the second vehicle B includes a camera 212, a vehicle outside-image capturing unit 214, an image display device 242, a image transmitting unit 215, a three-dimensional measuring instrument 232, a three-dimensional measuring unit 234, a measurement value transmitting unit 235, and a wireless communication interface 252. The camera 212 captures an image of the view in front of the vehicle in order to acquire the vehicle outside-image information 222. The vehicle outside-image capturing unit 214 captures an image of the view in front of the vehicle (vehicle's outside) by the camera 212. The image display device 242 displays an image captured by the camera 212. The image transmitting unit 215 transmits the vehicle outside-image information 222. The three-dimensional measuring instrument 232 performs a three-dimensional measurement of the environment in the picture range of the camera 212 using ultrasonic, laser, infrared rays, or the like in order to acquire a three-dimensional measurement value 262. The three-dimensional measuring unit 234 performs a three-dimensional measurement by the three-dimensional measuring instrument 232. The measurement value transmitting unit 235 transmits the three-dimensional measurement value 262. The wireless communication interface 252 performs data transmission/reception with the first vehicle A, which is a following vehicle.

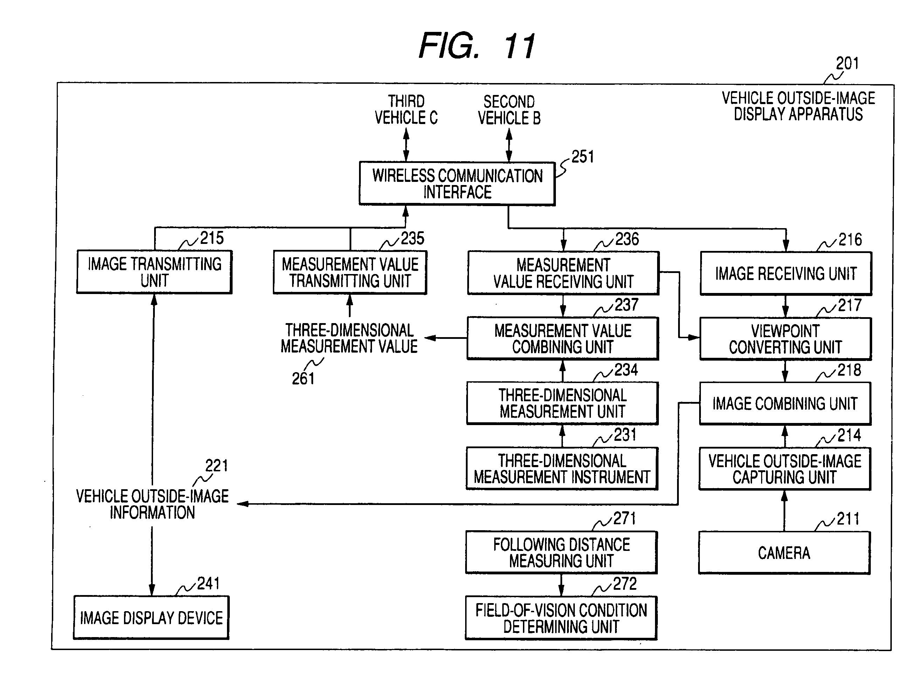

Fig. 11 is a block diagram illustrating the configuration of the vehicle outside-image display apparatus 201 provided for the first vehicle A. Referring to Fig. 11, the vehicle outside-image display apparatus 201 provided for the first vehicle A includes a camera 211, a vehicle outside-image capturing unit 214, a wireless communication interface 251, an image receiving unit 216, a viewpoint converting unit 217, an image combining unit 218, an image display device 241, an image transmitting unit 215, a three-dimensional measuring instrument 231, a three-dimensional measuring unit 234, a measurement value receiving unit 236, a measurement value combining unit 237, and a measurement value transmitting unit 235. The camera 211 captures an image of the view in front of the vehicle. The vehicle outside-image capturing unit 214 captures an image of the view in front of the vehicle (vehicle's outside) by the camera 211. The wireless communication interface 251 performs data transmission/reception with the second vehicle B, which is the forward vehicle, and the third vehicle C, which is the following vehicle. The image receiving unit 216 receives the vehicle outside-image information 222 from the second vehicle B through the wireless communication interface 251. The viewpoint converting unit 217 performs viewpoint conversion for the vehicle outside-image information 222 based on a three-dimensional measurement value 262 received by the later-described measurement value receiving unit 236. The image combining unit 218 combines the vehicle outside-image information 222, which has been subjected to the viewpoint conversion by the viewpoint converting unit 217, with the image captured by the vehicle outside-image capturing unit 214. The image display device 241 displays the renewed vehicle outside-image information 221, produced by the image combining unit 218. The image transmitting unit 215 transmits the renewed vehicle outside-image information 221 to the third vehicle C through the wireless communication interface 251. The three-dimensional measuring instrument 231 performs a three-dimensional measurement of an environment in a picture range of the camera 211. The three-dimensional measuring unit 234 performs a three-dimensional measurement by the three-dimensional measuring instrument 231. The measurement value receiving unit 236 receives the three-dimensional measurement value 262 from the second vehicle B through the wireless communication interface 251. The measurement value combining unit 237 combines the three-dimensional measurement value 262 received by the measurement value receiving unit 236 with the three-dimensional measurement value acquired by the three-dimensional measuring unit 234. The measurement value transmitting unit 235 transmits renewed three-dimensional measurement value 261 produced by the measurement value combining unit 237, to the third vehicle C through the wireless communication interface 251.

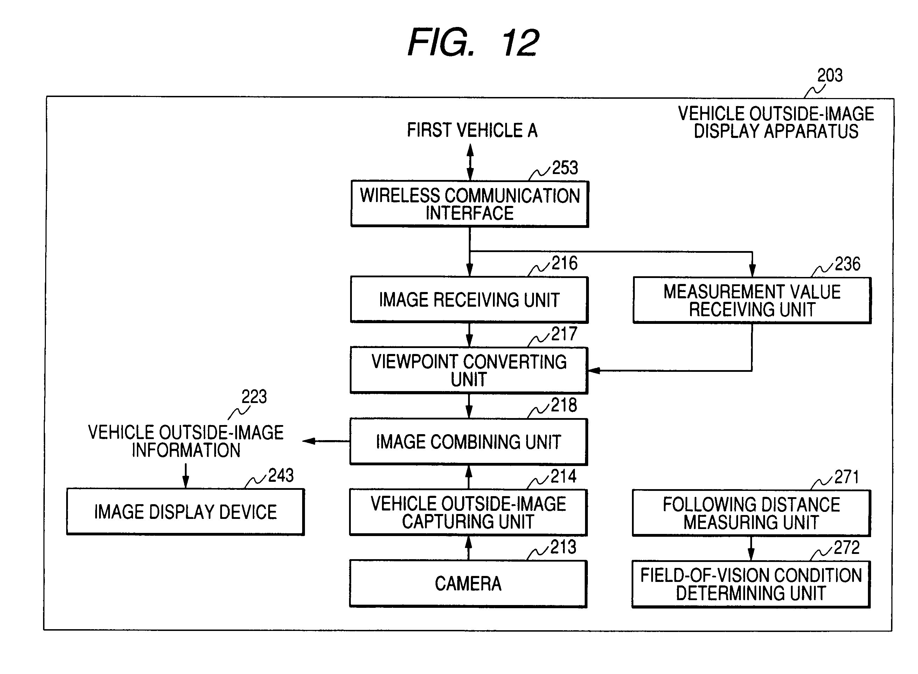

Fig. 12 is a block diagram illustrating the configuration of the vehicle outside-image display apparatus 203 provided for the third vehicle C. Referring to Fig. 12, the vehicle outside-image display apparatus 203 provided for the third vehicle C includes a camera 213, a vehicle outside-image capturing unit 214, a wireless communication interface 253, an image receiving unit 216, a measurement value receiving unit 236, a viewpoint converting unit 217, an image combining unit 218, and an image display device 243. The camera 213 captures an image of the view in front of the vehicle. The vehicle outside-image capturing unit 214 captures an image of the view in front of the vehicle (vehicle's outside) by the camera 213. The wireless communication interface 253 performs data transmission/reception with the first vehicle A, which is the forward vehicle. The image receiving unit 216 receives the vehicle outside-image information 221 from the first vehicle A through the wireless communication interface 253. The measurement value receiving unit 236 receives a three-dimensional measurement value 261 from the first vehicle A through the wireless communication interface 253. The viewpoint converting unit 217 performs viewpoint conversion for the vehicle outside-image information 221 based on the three-dimensional measurement value 261 received by the measurement value receiving unit 236. The image combining unit 218 combines the vehicle outside-image information 221 subjected to the viewpoint conversion by the viewpoint converting unit 217 with the image captured by vehicle outside-image capturing unit 214. The image display device 243 displays renewed vehicle outside-image information 223 produced by the image combining unit 218.

It should be noted that when a certain vehicle performs data reception, it transmits data request information to a forward vehicle in advance, and the forward vehicle transmits data to the vehicle in response to the request information; this is similar to the vehicle outside-image display system 100 according to the first embodiment described previously.

In addition, each of the vehicle outside-image display apparatus 201 to 203 further includes a following distance measuring unit 271 and a field-of-vision condition determining unit 272; this is also similar to the vehicle outside-image display system 100 according to the first embodiment described previously.

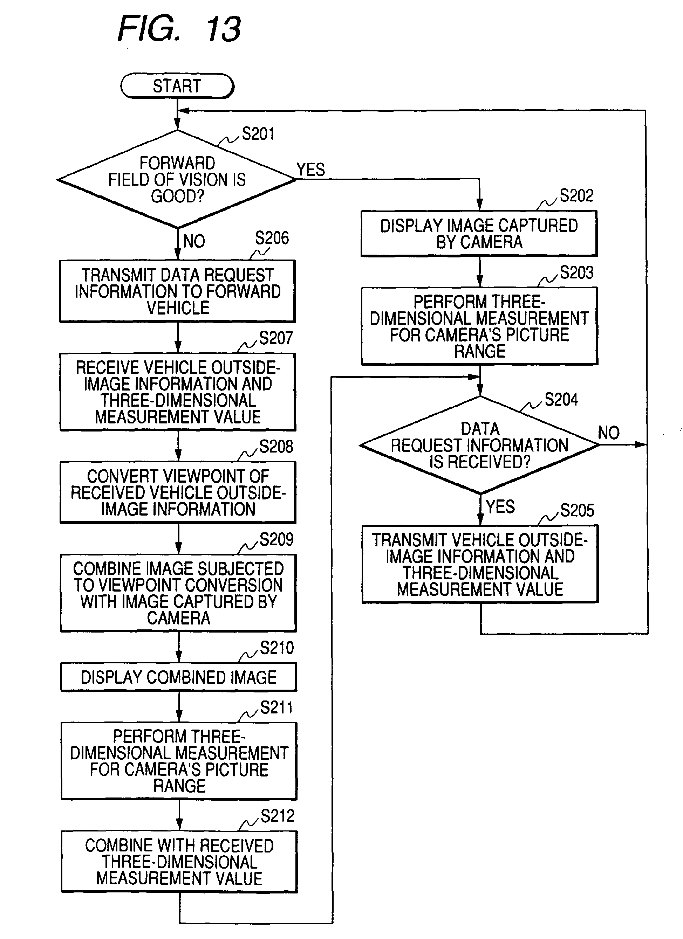

Next, the operation of the vehicle outside-image display system 200 thus configured according to the present embodiment is explained with reference to the flow-chart of Fig. 13.

First, it is determined by the field-of-vision condition determining unit 272 in a certain vehicle whether or not the forward field of vision is good (step S201). If it is determined in step S201 that the field of vision is good, it means that the vehicle is the second vehicle B, and the image captured by the installed camera 212 is displayed on the image display device 242 as it is (step S202). Next, The environment such as buildings existing in the picture range of the installed camera 212 is subjected to a three-dimensional measurement by the three-dimensional measuring unit 234 using the three-dimensional measuring instrument 232 (step S203). Subsequently, it is determined whether or not data request information is being received from a following vehicle through the communication interface 252 (step S204). If the data request information is being received, the image transmitting unit 215 and the measurement value transmitting unit 235 transmits the vehicle outside-image information 222, which is the image captured by the camera 212, and the three-dimensional measurement value 262, to the first vehicle A, which is the following vehicle, through the wireless communication interface 252 (step S205), and the process returns to step S201.

On the other hand, if it is determined in step S201 that the field of vision is not good, it means that the vehicle is either the first vehicle A or the third vehicle C, so data request information is transmitted to the forward vehicle through the wireless communication interface 251 or 253 (step S206). Next, the image receiving unit 216 and the measurement value receiving unit 236 respectively receive the vehicle outside-image information 222or 221 and the three-dimensional measurement value 262 or 261 from the forward vehicle through the wireless communication interface 251 or 253 (step S207). Subsequently, the received vehicle outside-image information 222 or 221 is subjected to a processing by the viewpoint converting unit 217, which converts its viewpoint to the viewpoint of the installed camera 211 or 213 based on the three-dimensional measurement value 262 or 261 (step S208). Next, a portion of the vehicle outside-image information subjected to the viewpoint conversion is combined with part of the image captured by the installed camera 211 or 213, the field of view of which is blocked by the forward vehicle to produce vehicle outside-image information 221 or 223 in which the field of vision is cleared (step S209). Subsequently, the combined vehicle outside-image information 221 or 223 is displayed on the image display device 241 or 243 (step S210). Next, the environment such as buildings existing in the picture range of the installed camera 211 or 213 is subjected to a three-dimensional measurement by the three-dimensional measuring unit 234 using the three-dimensional measuring instrument 231 (step S211). Subsequently, the measured three-dimensional measurement value is combined with the three-dimensional measurement value 262 or 261 received by the measurement value receiving unit 236 to produce a three-dimensional measurement value for the combined vehicle outside-image information 221 or 223 (step S212).

Next, it is determined whether or not data request information is being received from the following vehicle through the wireless communication interface 251 or 253 (step S204). If the data request information is being received, it means that the vehicle is the first vehicle A, so the image transmitting unit 215 and the measurement value transmitting unit 235 respectively transmit the vehicle outside-image information 221 and the three-dimensional measurement value 262 to the third vehicle C through the wireless communication interface 251 (step S205). Then, the process returns to step S201.

It should be noted that the present embodiment explained that by transmitting/receiving three-dimensional measurement values along with vehicle outside-image information, distortion arising in combining the images is corrected using the parallax due to the difference between the absolute positions of the cameras installed to the respective vehicles; however, it is also possible to install cameras in such a manner that images in all directions can be captured, in order to make transparent the vehicles that obstruct the field of view in all directions that can be viewed from a vehicle, or visualize the portions that become blind spots. In that case, however, it is necessary that three-dimensional measuring instruments be installed so that three-dimensional measurements can be performed also for those directions.

Furthermore, in order to correct distortion that occurs in combining images, it is also possible to provide an acquired image processing unit that carries out image processing so that received vehicle outside-image information has a viewpoint from the camera installed to the vehicle.

### THIRD EMBODIMENT

Fig. 9 is a block diagram illustrating the configuration of a vehicle outside-image display system 300 according to a third embodiment of the invention. The vehicle outside-image display system 300 according to the present embodiment differs from the foregoing vehicle outside-image display system 100 according to the first embodiment in that a camera 312 and a wireless communication interface are installed to an obstructive object 302 other than vehicles, such as a building and a tree, that can obstruct the field of view from a vehicle.

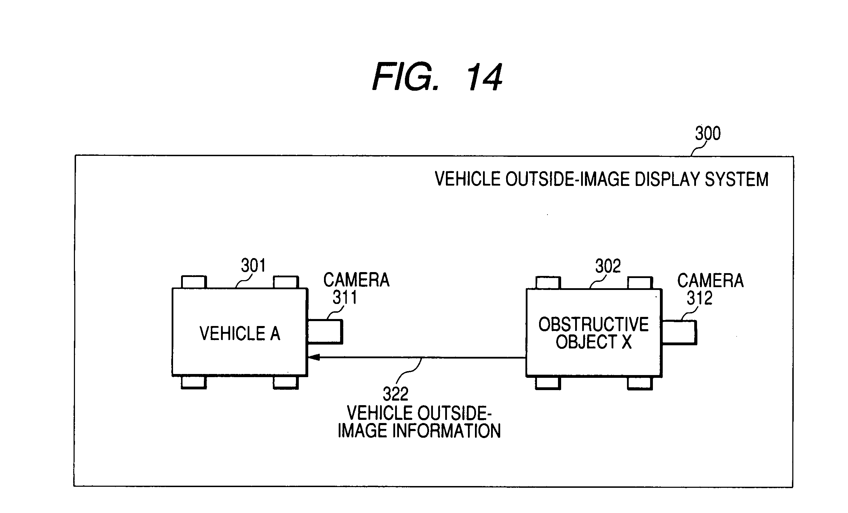

Specifically, referring to Fig. 14, the vehicle outside-image display system 300 according to the present embodiment includes an image transmitting device 302 provided for an obstructive object X and a vehicle outside-image display apparatus 301 provided for a vehicle A. The image transmitting device 302 transmits, to a rearward vehicle, image information 322 in which outdoor conditions are visualized through a viewpoint of an installed camera 312. The vehicle outside-image display apparatus 301 receives the image information 322 and combines the received image information 322 with information in which vehicle's outside conditions are visualized through a viewpoint of an installed camera 311.

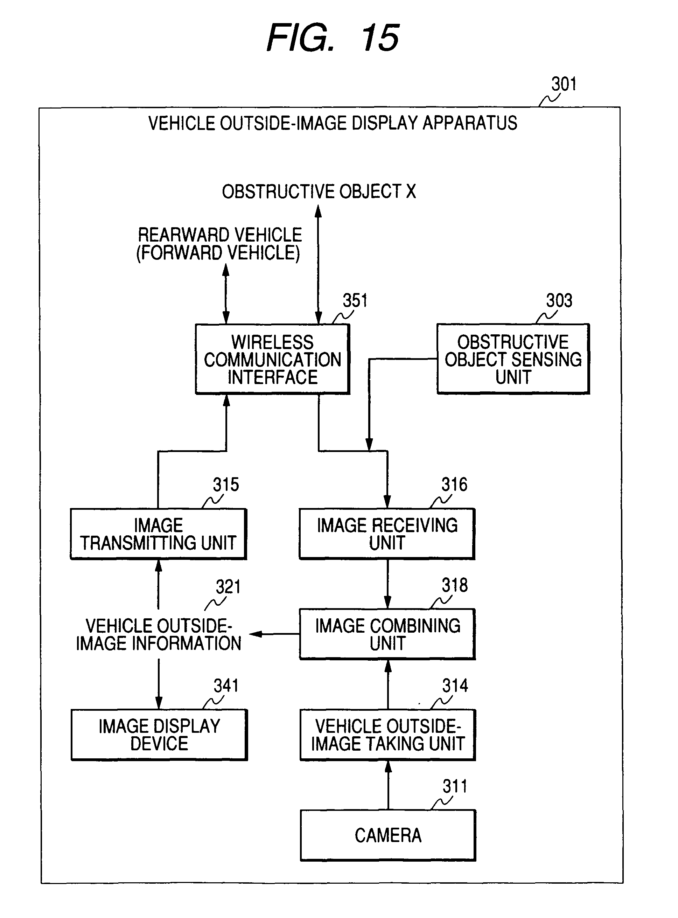

Fig. 15 is a block diagram illustrating the configuration of the vehicle outside-image display apparatus 301 provided for the vehicle A. Referring to Fig. 15, the vehicle outside-image display apparatus 301 provided for the vehicle A includes a camera 311, a vehicle outside-image capturing unit 314, a wireless communication interface 351, an obstructive object sensing unit 303, an image receiving unit 316, an image combining unit 318, an image display device 341, and an image transmitting unit 315. The camera 311 captures an image of the view in front of the vehicle. The vehicle outside-image capturing unit 314 captures an image of the view in front of the vehicle (vehicle's outside) by the camera 311. The wireless communication interface 351 performs data transmission/reception with the obstructive object X and the following vehicle (forward vehicle). The obstructive object sensing unit 303 senses the presence of the obstructive object X within the picture range of the camera 311. In response to the output from the obstructive object sensing unit 303, the image receiving unit 316 receives image information 322 from the obstructive object X through the wireless communication interface 351. The image combining unit 318 combines the image information 322 received by the image receiving unit 316 with the image captured by the vehicle outside-image capturing unit 314. The image display device 341 displays renewed vehicle outside-image information 321 produced by the image combining unit 318. The image transmitting unit 315 transmits the renewed vehicle outside-image information 321 through the wireless communication interface 351 to a following vehicle.

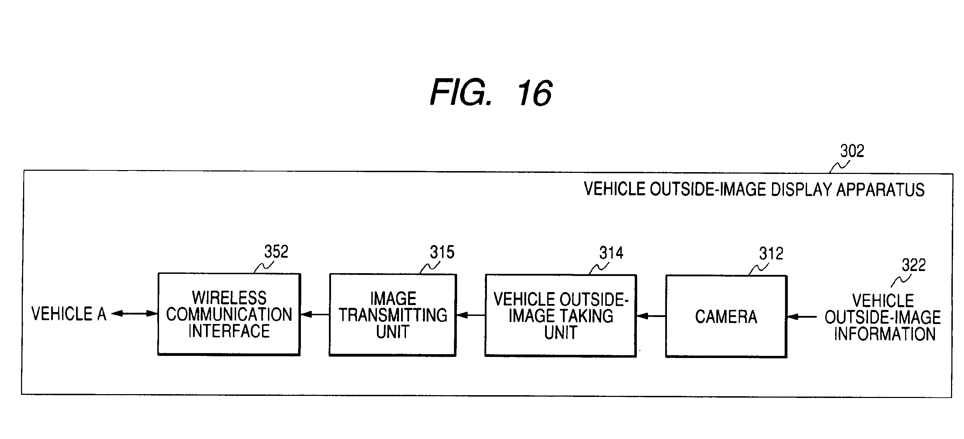

Fig. 16 is a block diagram illustrating the configuration of the image transmitting device 302 provided for the obstructive object X. Referring to Fig. 16, the image transmitting device 302 provided for the obstructive object X includes a camera 312, an image capturing unit 314, an image transmitting unit 315, and a wireless communication interface 352. The camera 312 captures an image in a direction that becomes a blind spot viewed from the vehicle A, in order to acquire the image information 322. The image capturing unit 314 captures images by the camera 312. The image transmitting unit 315 transmits the image information 322. The wireless communication interface 352 performs data transmission/reception with the vehicle A.

It should be noted that when the vehicle A performs data reception, it transmits data request information to the obstructive object X in advance, and the obstructive object X transmits data to the vehicle A in response to the request information; this is similar to the vehicle outside-image display system 100 according to the first embodiment described previously.

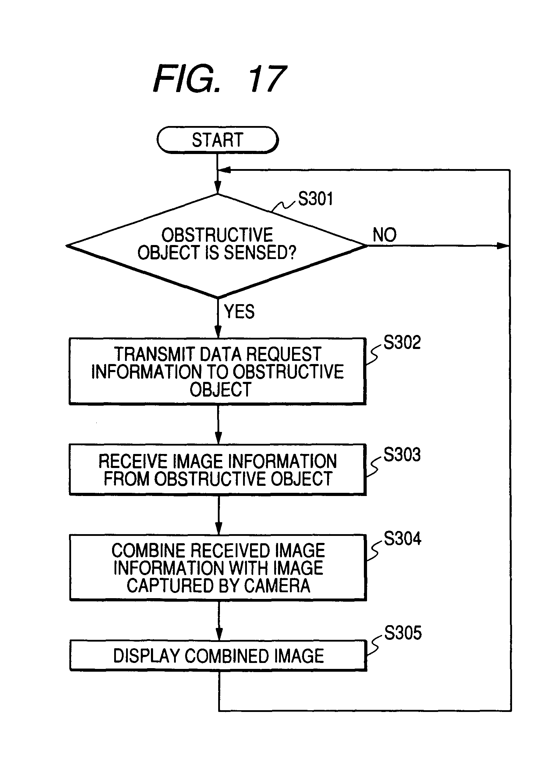

Next, the operation of the vehicle outside-image display system 300 thus configured according to the present embodiment is explained with reference to the flow-chart of Fig. 17.

First, in the vehicle A equipped with the vehicle outside-image display apparatus 301, the obstructive object sensing unit 303 senses the obstructive object X within the picture range of the camera 311 (step S301). Next, upon sensing the obstructive object X, the vehicle A transmits data request information to the obstructive object X through the wireless communication interface 351 (step S302). Next, the image receiving unit 316 receives the image information 322 from the obstructive object X through the wireless communication interface 351 (step S303). Subsequently, part of the received image information 322 is combined with the portion of the image captured by the installed camera 311 whose field of view is blocked by the obstructive object X to produce renewed vehicle outside-image information 321 in which the field of vision is cleared (step S304). Next, the combined vehicle outside-image information 321 is displayed on the image display device 341 (step S305).

Although the present embodiment has described an example in which a camera and a wireless communication interface are installed to an obstructive object other than vehicles, such as buildings or trees, that can obstruct the field of view, it is also possible to transmit the vehicle outside-image information 321 produced by the combining to a further rearward vehicle by the image transmitting unit 315. Moreover, it is possible to combine the image information 322 with received vehicle outside-image information from a forward vehicle.

As described above, the vehicle outside-image display system 300 according to the present embodiment makes it possible to receive image information from various obstructive objects. Therefore, even in such portions as the backsides of buildings or the portions that becomes a blind spot from a vehicle as the field of vision is blocked by trees or the like in the vehicle outside-image display system 100 according to the previously-described first embodiment, it is possible to display an image that is free of blind spots from driver's view angle by receiving image information from an obstacle itself that becomes obstruction.

As is clear from the foregoing description, guide information or route information acquired from map data can be combined with images that are obtained by a vehicle outside-image display apparatus of the invention and in which forward vehicles and obstructive objects that block the field of vision are made transparent. This makes it possible to obtain images that are in the same environment as the field of vision viewed by a driver and free of obstacles that block the field of vision in comparison with the environment of three-dimensional images produced from map data, such as in conventional navigation systems, leading to increased visibility and less misrecognitions for drivers.

Although the invention has been described in detail with reference to specific preferred embodiments thereof, it will be apparent to those skilled in the art that various changes and modifications may be made herein without departing from the scope and sprit of the invention.

The present application is made based on Japanese Patent Application No. 2003-149263, filed on May 27, 2003, the contents of which are incorporated by reference herein.

### INDUSTRIAL APPLICABILITY

The vehicle outside-image display apparatus according to the invention combines an image captured by a vehicle outside-image capturing unit with vehicle outside-image information received by an image receiving unit to display the combined image, and therefore, makes it possible to visualize the field of vision blocked by obstacles.

## Claims

1. A vehicle outside-image display apparatus, comprising:
a vehicle outside-image capturing unit that captures a vehicle's outside image by a camera;
an image receiving unit that receives vehicle outside-image information from outside;
an image combining unit that combines the vehicle outside-image information received by the image receiving unit with the image captured by the vehicle outside-image capturing unit; and
an image display device that displays renewed vehicle outside-image information produced by the image combining unit.

2. The vehicle outside-image display apparatus according to claim 1, wherein the image receiving unit receives the vehicle outside-image information from a vehicle ahead of a vehicle equipped with the vehicle outside-image display apparatus.

3. The vehicle outside-image display apparatus according to claim 1, wherein the image combining unit combines a portion of the vehicle outside-image information received by the image receiving unit with the image captured by the vehicle outside-image capturing unit.

4. The vehicle outside-image display apparatus according to claim 1, further comprising an image transmitting unit that transmits the renewed vehicle outside-image information produced by the image combining unit to outside.

5. The vehicle outside-image display apparatus according to claim 4, wherein the image transmitting unit transmits the renewed vehicle outside-image information produced by the image combining unit to a rearward vehicle relative to a vehicle equipped with the vehicle outside-image display apparatus.

6. The vehicle outside-image display apparatus according to claim 1, further comprising:
a following distance measuring unit that measures a following distance between a vehicle equipped with the vehicle outside-image display apparatus and a vehicle ahead thereof; and
a field-of-vision condition determining unit that determines, with the following distance measuring unit, whether or not a forward field of vision is blocked,
wherein vehicle outside-image information is received from the image receiving unit when it is determined that the forward field of vision is blocked by the vehicle ahead.

7. The vehicle outside-image display apparatus according to claim 1, further comprising:
a three-dimensional measuring unit that performs, by a three-dimensional measuring instrument, a three-dimensional measurement for an environment in a picture range captured by the vehicle outside-image capturing unit;
a measurement value receiving unit that receives a three-dimensional measurement value from outside; and
a viewpoint converting unit that converts the vehicle outside-image information to have a viewpoint from the camera based on the three-dimensional measurement value received by the measurement value receiving unit and supplies the converted information to the image combining unit.

8. The vehicle outside-image display apparatus according to claim 7, further comprising a measurement value combining unit that combines the three-dimensional measurement value received by the measurement value receiving unit with the three-dimensional measurement value acquired by the three-dimensional measuring unit.

9. The vehicle outside-image display apparatus according to claim 8, further comprising a measurement value transmitting unit that transmits a renewed three-dimensional measurement value produced by the measurement value combining unit to outside.

10. The vehicle outside-image display apparatus according to claim 9, wherein the measurement value transmitting unit transmits the renewed three-dimensional measurement value produced by the measurement value combining unit to a rearward vehicle relative to the vehicle equipped with the vehicle outside-image display apparatus.

11. The vehicle outside-image display apparatus according to claim 1, wherein the image receiving unit receives vehicle outside-image information from an obstructive object that obstructs a field of view ahead of a vehicle equipped with the vehicle outside-image display apparatus.
